# EUROPÄISCHE PATENTSCHRIFT

(11) **EP 2 873 315 B1**
(45) Veröffentlichungstag und Bekanntmachung des Hinweises auf die Patenterteilung: **02.08.2017**
(21) Anmeldenummer: 14003713.6
(22) Anmeldetag: 04.11.2014
(51) Int. Cl.: A01D 43/073, A01D 43/08

(54) **LANDWIRTSCHAFTLICHE ERNTEMASCHINE**
AGRICULTURAL HARVESTER
MACHINE DE RÉCOLTE

(30) Priorität: 08.11.2013 DE 102013018724
(43) Veröffentlichungstag der Anmeldung: 20.05.2015
(73) Patentinhaber: Maschinenfabrik Bernard Krone GmbH, 48480 Spelle (DE)
(72) Erfinder: Menke, Stefan, 48480 Spelle (DE); Schniederbruns, Bernd, 49835 Wietmarschen (DE); Ambrosy, Lars, 28213 Bremen (DE); Hory, Rainer, 28209 Bremen (DE)

(56) Entgegenhaltungen:
- EP-A1- 2 020 174
- EP-A1- 2 311 307
- EP-A2- 2 306 219
- DE-A1-102005 027 208
- US-A- 5 575 316

## Beschreibung

Die Erfindung betrifft eine landwirtschaftliche Erntemaschine, insbesondere einen selbstfahrenden Feldhäcksler mit einem verschwenkbaren Auswurfkrümmer zur Förderung von aufgenommenen und bearbeiteten Erntegut in einen Ladebehälter eines Transportfahrzeugs, wobei die von einer dem Auswurfkrümmer zugeordneten elektro-optische Vorrichtung erzeugten Signale einer elektronischen Auswerte- und Steuereinrichtung zur automatischen, zielgerichteten Lenkung des Erntegutstrahl in den Ladebehälter zugeführt werden.

Die Ernte von landwirtschaftlich angebauten Pflanzen, welche als Futtermittel oder als Biomasse in zerkleinerter, gehäckselter Form Verwendung finden, wird vorzugsweise mit einem selbstfahrenden Feldhäcksler durchgeführt. Durch einen entsprechenden Erntevorsatz an dem Feldhäcksler werden entweder die noch stehenden Pflanzen nahe dem Erdboden abgetrennt und einer Einzugsvorrichtung der Erntemaschine zugeführt oder aber bereits gemähtes und in Schwaden zusammengeführtes Erntegut vom Feldboden aufgenommen und ebenfalls der Einzugsvorrichtung der Erntemaschine zugeführt. Im weiteren Durchlauf durch den Feldhäcksler wird das Erntegut zerkleinert und mit Unterstützung einer Beschleunigungseinrichtung durch einen Auswurfkrümmer derart mit hoher Geschwindigkeit weitergefördert, dass es den Auswurfkrümmer in einem gebündelten Erntegutstrahl verlässt und auch noch in größerer Entfernung verlustfrei von einem Behälter aufgenommen wird.

Der Auswurfkrümmer ist in der Regel um eine vertikale Achse drehbar und um eine horizontale Achse verschwenkbar an der Erntemaschine befestigt. Darüber ist er zwischen einer Ruhestellung, in der er abgesenkt und etwa parallel zur Längsachse der Erntemaschine ausgerichtet ist und einer Betriebsstellung, in der er sich, mit dem abgabeseitigen Ende angehoben, insbesondere quer zur Fahrtrichtung der Erntemaschine erstreckt, verschwenkbar. Mittels einer Auswurfklappe am abgabeseitigen Ende des Auswurfkrümmers kann zusätzlich noch der Winkel, unter dem das Erntegut abgegeben wird, beeinflusst werden.

In der Praxis wird meistens ein neben der Erntemaschine herfahrendes Transportfahrzeug, bei dem es sich beispielsweise um einen Schlepper mit einem Transportanhänger oder um einen Lastwagen handelt, mit dem geernteten Gut relativ direkt beladen. Während der Wendefahrt am Vorgewende und insbesondere beim Anhäckseln eines Feldes, wenn neben dem Feldhäcksler noch kein abgeernteter Bereich für die Nebenherfahrt des Transportfahrzeugs zur Verfügung steht und dieses deshalb vorzugsweise hinter dem Feldhäcksler herfährt, ist das manuelle Steuern des Auswurfkrümmers für eine möglichst verlustfreie Übergabe des Ernteguts in den Transportbehälter eine besondere Herausforderung für den Bediener der Erntemaschine. Extrem gestiegene Durchsatzleistungen der modernen Feldhäcksler beanspruchen die Aufmerksamkeit des Fahrers zunehmend durch schnellere Erntefahrt und kürzere Befüllzeiten der Transportbehälter.

Um diese Beanspruchungen der Fahrer zu minimieren und die Ernteleistung durch Vermeidung von Stillstandszeiten und Gutverlusten zu erhöhen, wurden verschiedenste Systeme zur automatisierten Befüllung des Transportbehälters vorgeschlagen. Neueste Systeme, die auch bereits Serienreife erlangt haben, basieren bevorzugt auf elektro-optischen Einrichtungen, wobei optische Merkmale des Transportbehälters mittels mindestens einer Kamera erfasst werden und die Ausrichtung des Auswurfkrümmers derart gesteuert wird, dass der Erntegutstrahl in den Transportbehälter trifft.

Ein derartiges System ist bereits aus der DE 44 26 059 A1 bekannt.

In der Praxis stoßen optische Kamerasysteme jedoch an Grenzen, die durch äußere Einflüsse wie Staub, Regen oder mangelhafte Beleuchtung nicht selten vorkommen. Insbesondere in den besonderen Situationen, wie bei Kurvenfahrt und beim Anhäckseln machen sich diese Nachteile durch den vergrößerten Abstand zwischen Erntefahrzeug und Transportbehälter besonders bemerkbar. In solchen Fällen muss der Bediener dann manuell eingreifen, wobei zumindest beim Übergang auf die manuelle Steuerung Erntegutverluste unvermeidbar sind.

Bei weiteren bekannten Systemen ist nachteilig eine Kennzeichnung an den Transportbehältern zu deren Erkennung notwendig. Bei diesen Vorrichtungen ist die Überladesteuerung nachteilig auf jeweils nur eine spezielle Kombination von einer Erntemaschine und spezifisch ausgerüsteten Transportbehältern ausgelegt.

Aus der EP 2 020 174 A1 ist eine landwirtschaftliche Arbeitsmaschine bekannt geworden, die mit wenigstens einem Auswurfstutzen zur Beförderung des bearbeiteten Erntegutes auf ein Transportfahrzeug ausgestattet ist. Weiterhin umfasst die landwirtschaftliche Arbeitsmaschine eine elektro-optische Vorrichtung für die Richtungssteuerung des Auswurfstutzens während des Fördervorganges, wobei die elektro-optische Vorrichtung Parameter des Auswurfstutzens, des Transportfahrzeuges und der Arbeitsmaschine erfasst. Der Erfassungsbereich der elektro-optischen Vorrichtung ist damit nachteilig auf einen vorgegebenen Bereich festgelegt.

Demzufolge liegt der Erfindung die Aufgabe zugrunde, eine Erntemaschine mit einem verschwenkbaren Auswurfkrümmer zu schaffen, die eine automatische, verlustfreie und möglichst vollständige Befüllung von verschiedenen, unspezifischen Transportbehältern in jeder Erntesituation ermöglicht.

Diese Aufgabe wird erfindungsgemäß durch eine Erntemaschine mit den kennzeichnenden Merkmalen des Patentanspruchs 1 gelöst, wobei die Merkmale der weiteren Patentansprüche die Lösung in vorteilhafter Weise weiterentwickeln.

Nach der Erfindung wird ein selbstfahrender Feldhäcksler mit einem verschwenkbaren Auswurfkrümmer zur Förderung von aufgenommenen und bearbeiteten Erntegut in einen Transportbehälter eines Transportfahrzeugs, wobei die von einer dem Auswurfkrümmer zugeordneten elektro-optische Vorrichtung erzeugten Signale einer elektronischen Auswerte- und Steuereinrichtung zur automatischen, zielgerichteten Lenkung des Erntegutstrahl in den Transportbehälter zugeführt werden und die elektro-optische Vorrichtung als ein 3D-Laserscanner ausgelegt ist, welcher sich aus einem 2D-Scanner und einer Schwenkeinheit, durch die der 2D-Scanner um eine zumindest annähernd horizontale Achse verschwenkbar ist, zusammensetzt, wobei der 3D-Laserscanner in einer ersten Betriebsphase dazu eingerichtet ist, einen maximalen Erfassungsbereich zur Erkennung von Objekten zu scannen und der Erfassungsbereich des 3D-Laserscanners in einer zweiten Betriebsphase eingegrenzt ist.

Durch die Ausrüstung der erfindungsgemäßen Erntemaschine mit einem 3D-Laserscanner als elektro-optischen Vorrichtung zur automatischen Steuerung der Auswurfkrümmerbewegungen beim Überladevorgang auf ein Transportfahrzeug ist es erstmals möglich, die zuvor genannten Nachteile bisher bekannter Überladesteuerungen zu vermeiden und dadurch auch insbesondere in besonders schwierigen Erntesituationen wie beim Anhäckseln, eine verlustfreie automatisierte Überladung durchzuführen.

Unter einem Laserscanner wird eine Vorrichtung mit wenigstens einem Laser und einem Sensor verstanden, mittels derer ein Erfassungsbereich mit einem oder mehreren Laserlichtstrahlen zyklisch abtastbar ist, wobei aus dem reflektierten und von dem Sensor empfangenen Licht des Laserstrahls eine Position von Gegenstandsbereichen ermittelbar ist, an denen der Laserstrahl reflektiert wurde. Laserscanner zeichnen sich durch eine sehr hohe Genauigkeit und Geschwindigkeit bei der Positionsbestimmung aus.

Ein zuvor beschriebener, einfacher 2D-Laserscanner liefert jedoch nur ein zweidimensionales Abbild des Sichtbereiches, welches aber nicht in allen Situationen ausreichend für die Steuerung des Auswurfkrümmers ist. Da der Scanner vorteilhaft unterhalb des oberen Teils des Auswurfkrümmers an diesem befestigt ist, trifft der Laservorhang des 2D-Laserscanners bei variierenden Höheneinstellungen des Auswurfkrümmers nicht immer in der gleichen Höhe auf das Transportfahrzeug beziehungsweise den Transportbehälter, wodurch die Erkennung eines solchen dreidimensionalen Gebildes ebenfalls zumindest erschwert wird.

Aus diesem Grund weist die erfindungsgemäße Erntemaschine einen 3D-Laserscanner auf. Der 3D-Laserscanner basiert auf einen 2D-Laserscanner, der mit einer Schwenkeinheit kombiniert ist, welche angetrieben durch einen hochpräzisen Servoantrieb den 2D-Laserscanner um eine quer zur Längserstreckung des Auswurfkrümmers liegende Schwenkachse auf- und abschenkt. Somit entsteht ein großer Erfassungsbereich des Laserscanners. Die exakte Winkelposition der Schwenkachse wird mit den Entfernungsmessdaten des 2D-Laserscanners verknüpft. Dadurch entsteht ein präzises 3D-Abbild der Umgebung mit eventuellen Messobjekten.

Aus den einer elektronischen Auswerte- und Steuereinrichtung zugeführten Daten des 3D-Laserscanners werden durch Berechnungsverfahren erfasste Objekte als Transportbehälter identifiziert und entsprechende Befehle zur Ansteuerung der Bewegunsaktoren des Auswurfkrümmers für eine schnelle und sichere Verfolgung des Behälters durch den Auswurfkrümmer generiert.

Dazu zeichnet sich die Auswerte- und Steuereinrichtung der Erntemaschine nach der Erfindung in einer besonders vorteilhaften Ausführung durch folgende Vorgehensweise aus, wobei von einer Erntesituation beim Anhäckseln mit hinterherfahrendem Transportfahrzeug ausgegangen wird.

In einer ersten Betriebsphase wird ein Initialisierungsscan durchgeführt. Hierbei wird im gesamten Erfassungsbereich des Laserscanners nach einem Transportfahrzeug gesucht. Ist ein Transportfahrzeug erkannt worden, werden die Abmaße des Transportbehälters im Speicher hinterlegt. Werden mehrere Transportbehälter gefunden, wird der Behälter mit dem geringsten Abstand zum Scanner ausgewählt.

In einer zweiten Betriebsphase wird anschließend der Schwenk- und Erfassungsbereich des Scanners eingegrenzt. Der Schwenkbereich wird dabei so angepasst, dass nur noch die vordere Bordwand des Transportbehälters erfasst wird. Die Schwenkdauer wird dadurch deutlich reduziert, wodurch die Scanrate erhöht und damit die Auflösung hintereinanderfolgender Scans und damit die Nachverfolgung deutlich verbessert wird. Der Schwenkbereich muss in Abhängigkeit von Abstand und Ausrichtung des Wagens zum Scanner dynamisch angepasst werden. Dies erfolgt anhand der Konturmerkmale der Wagenvorderseite. Wird dabei ein bestimmter Objekt-Lagewinkel überschritten, wechselt die Verfolgung von der vorderen Bordwand auf die jeweils zugewandte lange Seite des Transportbehälters.

Des Weiteren werden von der Auswerte- und Steuereinheit auch nur einzelne Linienscans (2D) ausgewertet. Um die Relativposition bestimmen zu können, werden neben der sogenannten Punktewolke eines Komplettscans (3D) auch die Daten einzelner Linienscans heran gezogen. Diese werden zeitlich gesehen viel öfter aktualisiert, sodass der neue Relativwinkel öfter und schneller berechnet werden kann, da das auszuwertende Datenvolumen viel geringer ist. Aus den hinterlegten Transportbehälterabmaßen kann von der Position der vorderen Bordwand auf den restlichen Behälter geschlossen werden.

Eine besonders vorteilhafte Weiterbildung der Erfindung sieht vor, dass durch Auswertung der erfassten Daten bei Durchführung von mehreren Komplettscans unter bestimmten Bedingungen der Füllstand des Transportbehälters ermittelt wird. Dabei ist es dann denkbar, dass der Fahrer den Zielpunkt des Erntegutstrahls im Transportbehälter entweder vorgibt, oder eine automatische Nachregelung entsprechend des Füllstands und dessen Verteilung im Behälter erfolgt.

Somit wird durch die Merkmale der Erfindung erstmals eine landwirtschaftliche Erntemaschine nach dem Oberbegriff des Patentanspruchs 1 zur Verfügung gestellt, die in allen Erntesituationen, insbesondere auch dann wenn das Transportfahrzeug zur Aufnahme des Ernteguts nicht parallel zur Erntemaschine fahren kann, eine vollautomatische, verlustfreie Beladung des Transportfahrzeugs bietet. Der Fahrer der Erntemaschine wird dadurch extrem entlastet und kann sich mit dem Blick nach vorne ganz auf das Fahren konzentrieren.

Nachfolgend wird ein Ausführungsbeispiel anhand einer Zeichnung näher erläutert und beschrieben.

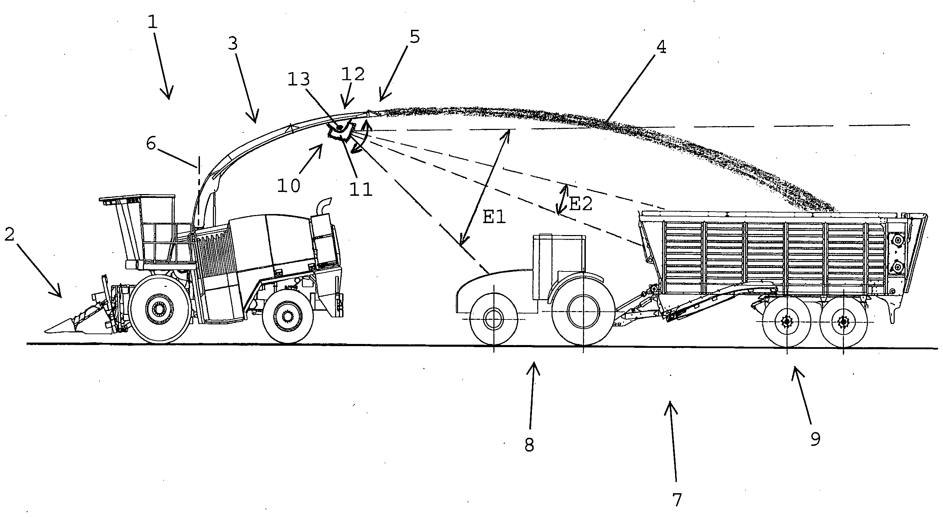

Die Zeichnung zeigt in Seitenansicht eine erfindungsgemäße Erntemaschine in der Ausführung eines selbstfahrenden Feldhäcksler mit einem zugeordneten Transportfahrzeug.

Der in der Zeichnung dargestellte Feldhäcksler 1 ist mit einem Erntevorsatz 2 zur Aufnahme von Erntegut ausgerüstet. Der aufgenommene Erntegutstrom durchläuft zumindest ein nicht dargestelltes Zerkleinerungsaggregat innerhalb des Häckslers 1, und wird durch eine Beschleunigungseinrichtung derart beschleunigt, dass er mit hoher Geschwindigkeit den Auswurfkrümmer 3 durchläuft und an dessen Ende diesen immer noch mit hoher Geschwindigkeit verlässt. Die Abgaberichtung / Flugbahn des Ernteguts 4 wird dabei von einer verstellbaren Auswurfklappe 5 beeinflusst. Außerdem ist der Auswurfkrümmer 3 um eine zumindest annähernd vertikale Drehachse 6 verschwenkbar und in der Höhe am Abgabeende ebenfalls verstellbar. Das in der Zeichnung dem Feldhäcksler 1 folgende Transportfahrzeug 7 ist als Gespann aus einem Schlepper 8 mit einem angehängten Transportanhänger, im Folgenden als Transportbehälter 9 bezeichnet, dargestellt. Die Gesamtdarstellung zeigt die Erntesituation beim sogenannten Anhäckseln, wenn neben dem Feldhäcksler 1 noch kein Platz für eine Parallelfahrt des Transportfahrzeugs 7 vorhanden ist und dieses deshalb hinter dem Feldhäcksler 1 herfahren muss. Die auf Grund der weiten Entfernung zwischen dem Auswurfkrümmerende und dem Transportbehälter 9 schwierige Erntegut-Überladesituation ist in der Zeichnung gut zu erkennen. Durch die weite Flugbahn des Ernteguts 4 wirkt sich die kleinste Bewegung am Auswurfkrümmerende am Auftreffpunkt des Erntegutstrahl im Transportbehälter 9 sehr stark aus. Die schmale Silhouette des Transportfahrzeugs 7 in Längsrichtung erschwert die Beladung noch zusätzlich. Am Auswurfkrümmer 3 des Feldhäckslers 1 ist die elektro-optische Vorrichtung 10 für die automatische Auswurfkrümmersteuerung angeordnet. Dieser 3D-Laserscanner 10 besteht aus einem 2D-Laserscanner 11 und einer Schwenkeinheit 12, um dessen horizontal ausgerichtete Schwenkachse 13 der 2D-Laserscanner 11 ähnlich einer Nickbewegung verschwenkbar ist. Bei Ausnutzung des maximalen Schwenkwinkels der Schwenkeinrichtung 12 ergibt sich so ein maximaler Erfassungsbereich E1 des 3D-Laserscanners 10. Nach der Identifizierung des Transportbehälters 9 wird der Erfassungsbereich zum Vorteil einer schnelleren Scanfrequenz und damit höheren Auflösung dynamisch durch Begrenzung des Schwenkwinkels auf einen möglichst kleinen Erfassungsbereich E2 eingeschränkt.

In der Zeichnung ist beispielhaft die schwierige Übergabesituation beim Anhäckseln dargestellt. Selbstverständlich wirken sich die Merkmale der Erfindung der Erntemaschine 1 ebenfalls bei weiteren Übergabesituationen, wie beispielsweise bei der üblichen Parallelfahrt vorteilhaft aus.

## Patentansprüche

1. Selbstfahrender Feldhäcksler mit einem verschwenkbaren Auswurfkrümmer (3) zur Förderung von aufgenommenen und bearbeiteten Erntegut (4) in einen Transportbehälter (9) eines Transportfahrzeugs (7), wobei die von einer dem Auswurfkrümmer (3) zugeordneten elektro-optische Vorrichtung (10) erzeugten Signale einer elektronischen Auswerte- und Steuereinrichtung zur automatischen, zielgerichteten Lenkung des Erntegutstrahl in den Transportbehälter (9) zugeführt werden und die elektro-optische Vorrichtung als ein 3D-Laserscanner (10) ausgelegt ist, welcher sich aus einem 2D-Scanner (11) und einer Schwenkeinheit (12), durch die der 2D-Scanner (11) um eine zumindest annähernd horizontale Achse (13) verschwenkbar ist, zusammensetzt, wobei der 3D-Laserscanner (10) in einer ersten Betriebsphase dazu eingerichtet ist, einen maximalen Erfassungsbereich (E1) zur Erkennung von Objekten zu scannen, **dadurch gekennzeichnet, dass** der Erfassungsbereich (E1) des 3D-Laserscanners (10) in einer zweiten Betriebsphase eingegrenzt ist.

2. Landwirtschaftliche Erntemaschine (1) nach Anspruch 1, **dadurch gekennzeichnet, dass** der Erfassungsbereich (E1) des 3D-Laserscanners (10) in einer zweiten Betriebsphase durch Anpassung des Schwenkwinkels der Schwenkeinheit (12) eingrenzbar ist.

3. Landwirtschaftliche Erntemaschine (1) nach zumindest einem der vorhergehenden Ansprüche, **dadurch gekennzeichnet, dass** die Auswerte- und Steuereinrichtung derart eingerichtet ist, nicht nur Punktewolken von Komplettscans sondern auch die Daten einzelner Linienscans für die Bestimmung einer Relativposition auszuwerten, wobei durch das viel geringere Datenvolumen die Berechnungen neuer Relativwinkel wesentlich schneller erfolgen.

4. Landwirtschaftliche Erntemaschine (1) nach zumindest einem der vorhergehenden Ansprüche, **dadurch gekennzeichnet, dass** der 3D-Laserscanner (10) an dem Auswurfkrümmer (3) angeordnet ist und gemeinsam mit diesem verschwenkt.

## Claims

1. Self-propelled forage harvester comprising a pivotable discharge chute (3) for conveying crops (4) that have been picked up and processed into a transport container (9) of a transport vehicle (7), the signals generated by an electro-optical apparatus (10) associated with the discharge chute (3) being transmitted to an electronic analysis and control device for automatically guiding the crop stream into the transport container (9) in a targeted manner, and the electro-optical apparatus being designed as a 3D laser scanner (10) that is composed of a 2D scanner (11) and a pivot unit (12), by means of which the 2D scanner (11) can be pivoted about an at least approximately horizontal shaft (13), the 3D scanner (10) being designed, in a first operating phase, to scan a maximum detection range (E1) for detecting objects to be scanned, **characterised in that** the detection range (E1) of the 3D laser scanner (10) is narrowed in a second operating phase.

2. Agricultural harvester (1) according to claim 1, **characterised in that** the detection range (E1) of the 3D laser scanner (10) can be narrowed in a second operating phase by adjusting the pivot angle of the pivot unit (12).

3. Agricultural harvester (1) according to at least either of the preceding claims, **characterised in that**, in order to determine a relative position, the analysis and control device is designed to analyse not only point clouds of complete scans, but also data regarding individual line scans, the calculations of new relative angles being considerably quicker owing to the much lower volumes of data.

4. Agricultural harvester (1) according to least one of the preceding claims, **characterised in that** the 3D laser scanner (10) is arranged on the discharge chute (3) and pivots together therewith.

## Revendications

1. Ensileuse automotrice comportant une goulotte (3) pivotante pour transférer les produits de récolte (4) pris et traités dans un conteneur de transport (9) d'un véhicule de transport (7),
- les signaux générés par un dispositif électro-optique (10) associé à la goulotte (3) sont transmis à une installation électronique d'exploitation et de commande pour guider automatiquement, de manière ciblée, le jet d'ensilage dans le conteneur de transport (9) et le dispositif électro-optique est sous la forme d'un laser de balayage 3D (10) qui se compose d'un laser de balayage 2D (11) et d'une unité de pivotement (12) qui pivote le laser de balayage 2D (11) autour d'un axe (13) au moins sensiblement horizontal,
- le laser de balayage 3D (10) étant conçu pour balayer une plage de saisie maximale (E1) dans une première phase de fonctionnement pour reconnaître des objets,
ensileuse **caractérisée en ce qu'**
on utilise la plage de saisie (E1) du laser de balayage 3D (10) dans une seconde phase de fonctionnement.

2. Ensileuse (1) selon la revendication 1,
**caractérisée en ce que**
la plage de saisie (E1) du laser de balayage 3D (10) est limitée dans la seconde phase de fonctionnement par l'adaptation de l'angle de pivotement de l'unité de pivotement (12).

3. Ensileuse (1) selon au moins l'une des revendications précédentes, **caractérisée en ce que**
l'installation d'exploitation et de commande exploite non seulement les nuages de points du balayage complet, mais également les données des différentes lignes de balayage pour déterminer une position relative,
- pour avoir un volume de données beaucoup plus faible permettant de calculer beaucoup plus rapidement le nouvel angle relatif.

4. Ensileuse (1) selon au moins l'une des revendications précédentes, **caractérisée en ce que**
le laser de balayage 3D (10) est installé sur la goulotte (3) et pivote en même temps que celle-ci.
